Europäisches Patentamt

European Patent Office

Office européen des brevets

(11) Publication number: **0 045 475**
**B1**

## (12) EUROPEAN PATENT SPECIFICATION

(45) Date of publication of patent specification: **06.11.85**

(21) Application number: **81105954.2**

(22) Date of filing: **28.07.81**

(51) Int. Cl.⁴: **H 02 G 5/02**

(54) Support assembly of a three-phase electrical conductor system.

(30) Priority: **01.08.80 PL 226035**

(43) Date of publication of application:
**10.02.82 Bulletin 82/06**

(45) Publication of the grant of the patent:
**06.11.85 Bulletin 85/45**

(84) Designated Contracting States:
**AT CH DE FR GB IT LI SE**

(56) References cited:
**FR-A-1 306 118**
**US-A-4 039 744**

**BROWN BOVERI MITTEILUNGEN, vol. 61, no. 4, April 1974, pages 167-173, Baden, CH., A. EIDINGER et al.: "SF6-isolierte Rohrgaskabel für die Übertragung höchster Leistungen"**

(73) Proprietor: **Przedsiebiorstwo Montazu Elektrycznego "ELEKTROBUDOWA"**
**ul. Mickiewicza 15**
**40-092 Katowice (PL)**

(72) Inventor: **Hologa, Zygmunt**
**ul.Mikolowska 37/39 m 41**
**Katowice (PL)**

(74) Representative: **Ebbinghaus, Dieter et al**
**v. FÜNER, EBBINGHAUS, FINCK Patentanwälte**
**European Patent Attorneys Mariahilfplatz 2 & 3**
**D-8000 München 90 (DE)**

Courier Press, Leamington Spa, England.

## Description

The invention relates to a support assembly for a three-phase conductor system as described in the pre-characterizing portion of claim 1. Such support assembly is known from BROWN BOVERI MITTEILUNGEN, vol. 61, No. 4, April 1974, pages 167 to 173, Baden, CH.

Well-known from French patent No. 1.306.118 is the design of fastening the bus bar in the enclosure of single-phase, high-current bus bars.

Generally speaking the design consists in supporting the high-current bus bar on a supporting insulator articulated with the enclosure in its vertical axis, with additional two shock-absorbing spring insulators placed in horizontal axis of the enclosure.

This design has the following drawbacks:
— necessity of using two types of insulators; one supporting and two shock absorbing-pressurising insulators in each support point of the high-current bus bar;
— arduous transport due to the fact that the high-current bus bar is not protected against undesirable vertical movements that may damage the insulator or the necessity of the high-current bus bar transportation to the place of installation without placing it on the supporting insulators;
— axial movements of the high-current bus bar induced by temperature changes are transferred individually by single insulators, causing the necessity of using insulators of relatively high mechanical strength to breaking;
— increased consumption of materials and increased expenditure of work during production, assembly and in the exploitation period because of three insulators in each support point;
— increased failure rate of single-phase high current bus bars caused by the application of three insulators in each support point of particular phase;
— production and assembly difficulties in case of vertical arrangement of the generator connections, occurring often in water power stations.

There is also well-known the solution according to applied Polish invention PL—A—225917 consisting in that the conductor is freely supported in the enclosure in the fastening point by 2 supporting insulators, spaced at 60° from the vertical axis, the condition being maintained that the unit weight of the conductor is greater than the unit vertical force which could act on the conductor in conditions of a short circuit.

This solution, although the reliability of the generator connections is increased in comparison with the commonly used design of high-current bus-bar fastening to the enclosure by means of three or even four insulators in each fixing point, has some inconveniences as:
— uselessness of application in single-phase bus bars with non-continuous enclosures or with chokes, because at that time the magnitude of forces acting on the bus bar during two- and three-phase short-circuits exceeds the value of the weight of the bus bar and in consequence the bus bar will fall-out of the arrangement;
— uselessness of application where the generator connections are arranged vertically on a larger distance, for example in water-power stations;
— all stresses and axial movements of the high-current bus bar developed by temperature variations are transferred individually by particular insulators;
— the supporting insulators placed at an angle of 60° from the vertical axis, are exposed to a static breaking force caused by the weight of bus bar.

In the support assembly known from the initially mentioned BROWN BOVERI MITTEILUNGEN each conductor is fixed inside a sleeve, wherein said conductors are supported by three insulators spaced inside tubular enclosures at every 120°. The described construction refers to a gas cable with an insulation $SF_6$, so to a conductor of a diameter of a few or a dozen or so centimeters, and of a small unit weight amounting to only a few kilograms, falling to a meter of length. The diameter of the aluminium ring and the conductor have been differentiated due to construction reasons, in such a way, as to secure the possibility of its movement, resulting from extension caused by rise of temperature of the conductor inside the ring, the metallic friction eliminated.

The described construction cannot be used in high-current isolated phase bus ducts in which the conductor is of a diameter of several dozen kilograms falling on every meter of length.

Moreover, the conductor is supported at every 6th to 10th meter, causing a point pressure on the ring amounting to hundreds of kilograms.

The aim of the invention is to eliminate the disadvantages of the known solutions and to work out a design of high-current bus bar support assembly applying the newly constructed sleeves connected with the supporting insulators placed in the screening enclosure of high-current bus-bars, using a reduced quantity of supporting insulators. Thus the solution will be material-saving, of increased reliability during the exploitation period and at the same time adapted to known systems of enclosures connection.

This aim has been achieved in accordance with the invention by the features characterized in claim 1. In other words, the support assembly has three spatially separated single-phase electrical conductors, lying in a horizontal plane on a support construction or floor. The conductors of high-current enclosed bus-bars are held in the screening enclosure at each support point by means of a sleeve connected with supporting insulators, which has preferably the shape of a ring fixed to the supporting insulators.

The conductor has freedom of axial shifting in the sleeves.

When two supporting insulators are applied in each support point of the high-current bus bar, the optimum solution is attained if one of the supporting insulators to which the sleeve has been attached is arranged in the vertical axis in the bottom part of the screening enclosure and the other supporting insulator is placed in the horizontal axis.

In the outer phases R, T an advantageous situation accurs when the horizontally arranged supporting insulators are placed in the outer part of the enclosure.

The position of this insulator in the central phase is optional.

In connections of the highest power generators, where the peak rated currents equal to several hundred kiloamperes, it is preferable to install the third, additional insulator in the central phase and this insulator is to be placed in the horizontal axis of the enclosure as well, as specified in claim 2.

Association of the described technical measures enables to attain profitable effects of the invention, which are as follows:

— introduction of a ring shaped sleeve eliminates practically the need to apply more than two supporting insulators in each point of the bus bar support;

— material and labour consumption in the production of generator connections decreases because the fastening of the third insulator required the application of additional assembly holes argon-arc welded and of an additional insulator, usually the spring-shock absorbing one, or other shock absorbing devices;

— the sleeve connects the supporting insulators into one mechanical system of high endurance to the action of mechanical forces;

— mechanical forces that occur for example due to dynamic actions or axial movements of bus bar are always decomposed through the sleeve on the two (three) insulators;

— the high-current bus bar is always held centrally in the screening enclosure, i.e. in vertical and horizontal layout of the generator connections;

— even so only two insulators are used the solution finds application in all three known systems of enclosures joining, i.e. non-continuous, with chokes and without any limitations in the continuous system.

Moreover, the location of one insulator in the lower part of the screening enclosure causes that the insulator is constantly exposed to a compressive force only from the weight of the high-current bus bar, and the insulators, especially those made of epoxy resins are very resistant to such a force.

In case of double-phase or three-phase short-circuiting, the insulator placed in the horizontal axis of outer phases R, T also receives only dynamic compressive forces because the force acts in its axis. The insulator fastened in the horizontal axis in the central phase S receives in case of dynamic forces either a compressive force like the phases R, T or a tensile force.

However, the coupling of the said insulator by means of the sleeve with the lower insulator brings about that the lower insulator carries a part of reaction and sustains the breaking force.

For severe dynamical requirements of the greatest power generators of the order of 1000 MW it is also advantageous to employ an additional third insulator in the central phase. Then all insulators of phases R, S, T placed in horizontal axes of the enclosures will be exposed in conditions of short-circuit to a compressive force exclusively.

Apart from the advantages described above the ring shaped sleeve has another additional merit consisting in its buffering action, damping any excentrical movements of the bus bar in the sleeve.

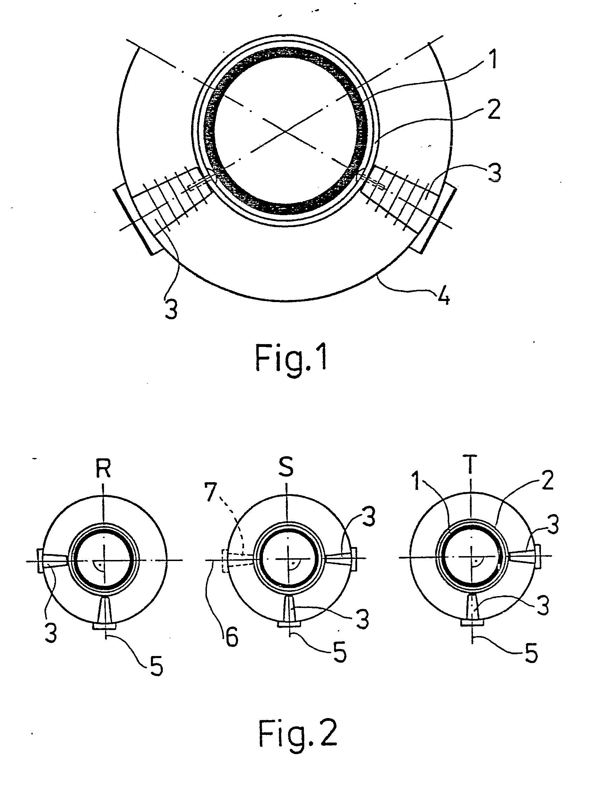

The subject of the invention is further explained with reference to the embodiments shown in the drawings, of which Fig. 1 presents the cross-section of an enclosed bus-bar and Fig. 2 shows the cross-section of a generator connection composed of three single-phase enclosed high current bus bars.

According to the invention the assembly supporting the conductor by means of the sleeve connected with the supporting insulators, in the screening enclosure of single-phase high current bus bars consists of a conductor 1 placed inside a sleeve 2, preferably in form of a ring and durably fastened to supporting insulators 3 attached to the screening enclosure or shell 4 or to its segments, the conductor 1 having freedom of axial movements inside this sleeve 2. In horizontally arranged generator connections one of the supporting insulators 3 of the given support point of the conductor 1 located in the sleeve 2, is fastened in the vertical axis 5 of the lower part of the enclosure 4 while the other supporting insulator 3 is situated in the horizontal axis 6 of the enclosure 4.

In special cases a third supporting insulator 7 is additionally fitted in the axis 6 of the central phase S.

## Claims

1. A support assembly for a three-phase conductor system (R, S, T) having three spatially separated single-phase electrical conductors (1) lying in a horizontal plane, each of said electrical conductors (1) comprising

— a sleeve (2) in which said conductor (1) is placed;

— a tubular screening enclosure (4),

— a plurality of rings (2) distributed along the length of said tubular screening enclosure (4),

— at least two supporting insulators (3) fastened to said enclosure (4) and engaging said sleeve (2) so that said electrical conductor (1) is slidably supported within the sleeve (2),

characterised in that

— a first supporting insulator (3) is situated along the vertical axis of a transverse section of the enclosure (4), thereby engaging the sleeve (2) from below;

— a second supporting insulator (3) is situated in the horizontal axis of a transverse section of the enclosure (4); and wherein the horizontally arranged insulators (3) of the outer phases (R, T) are respectively situated at the side opposite from the central phase (S).

2. Assembly according to claim 1, characterized in that in the central phase a third supporting insulator is provided, which is situated in the horizontal axis opposite to the second supporting insulator (3).

## Revendications

1. Ensemble de support destiné à un système triphasé (R, S, T) ayant trois conducteurs électriques monophasés séparés dans l'espace (1) disposés dans un plan horizontal, chacun des conducteurs électriques (1) comprenant:
— un manchon (2) dans lequel est placé le conducteur (1),
— une enceinte tubulaire de blindage (4),
— plusieurs anneaux (2) répartis suivant la longueur de l'enceinte tubulaire de blindage (4),
— au moins deux isolateurs de support (3) fixés à l'enceinte (4) et coopérant avec le manchon (2) de manière que le conducteur électrique (1) soit supporté dans le manchon (2) en pouvant coulisser,
caractérisé en ce que
— un premier isolateur de support (3) est placé le long de l'axe vertical d'une section transversale de l'enceinte (4), si bien qu'il coopère avec le manchon (2) par-dessous,
— un second isolateur de support (3) est placé suivant l'axe horizontal d'une coupe transversale de l'enceinte (4), et les isolateurs disposés horizontalement (3) des phases externes (R, T) sont disposés du côté opposé à celui de la phase centrale (S).

2. Ensemble selon la revendication 1, caractérisé en ce que, dans la phase centrale, un troisième isolateur de support est disposé, et il est placé sur l'axe horizontal du côté au second isolateur de support (3).

## Patentansprüche

1. Stützanordnung für ein dreiphasiges Leitersystem (R, S, T) mit drei räumlich getrennt angeordneten einphasigen, in einer horizontalen Ebene angeordneten elektrischen Leitern (1), wobei jeder der elektrischen Leiter (1) enthält:
— eine Hülse (2), in der der Leiter (1) angeordnet ist;
— eine rohrförmige abschirmende Kapsel (4),
— mehrere über die Länge der rohrförmigen abschirmenden Kapsel (4) angeordnete Ringe,
— wenigstens zwei an der Kapsel (4) befestigte und mit der Hülse (2) verbundene Stützisolatoren (3), so daß der elektrische Leiter (1) innerhalb der Hülse (2) gleitend beweglich getragen ist,
dadurch gekennzeichnet, daß
— ein erster Stützisolator (3) längs der vertikalen Achse eines Querschnittes der Hülse (2) angeordnet ist, so daß er mit der Hülse (2) von unten verbunden ist;
— ein zweiter Stützisolator (3) in der horizontalen Achse des Querschnittes der Kapsel (4) angeordnet ist, wobei die horizontal angeordneten Isolatoren (3) der äußeren Phasen (R, T) jeweils an der von der mittleren Phase (S) abgewandten Seite angeordnet sind.

2. Stützanordnung nach Anspruch 1, dadurch gekennzeichnet, daß in der mittleren Phase ein dritter Stützisolator vorgesehen ist, der in der horizontalen Achse dem zweiten Stützisolator (3) gegenüberliegend angeordnet ist.

0 045 475

Fig.1

Fig.2